# EUROPÄISCHE PATENTSCHRIFT

(11) **EP 2 302 481 B1**
(45) Veröffentlichungstag und Bekanntmachung des Hinweises auf die Patenterteilung: **10.08.2016**
(21) Anmeldenummer: 10009243.6
(22) Anmeldetag: 06.09.2010
(51) Int. Cl.: G05D 1/00, G05D 1/10, H04N 7/18

(54) **Verfahren zur Bereitstellung von Steuerbefehlen für ein mittels einer Bedieneinheit lenkbares Fahrzeug und Steuerungssystem für ein derartiges Fahrzeug**
Method for providing control commands for a vehicle which can be steered using a control unit and control system for such a vehicle
Procédé de commande pour un véhicule pouvant être dirigé à l'aide d'une unité de commande et système de commande pour un tel véhicule

(30) Priorität: 18.09.2009 DE 102009042172
(43) Veröffentlichungstag der Anmeldung: 30.03.2011
(73) Patentinhaber: MBDA Deutschland GmbH, 86529 Schrobenhausen (DE)
(72) Erfinder: Schöttl, Alfred, Dr., 80809 München (DE)
(74) Vertreter: Avenhaus, Beate

(56) Entgegenhaltungen:
- US-A- 4 855 822
- US-A1- 2006 187 224
- FUMITOSHI OGAKI ET AL: "Adaptive Teleoperation of a Mobile Robot under Communication Time Delay", ROBOTIC AND SENSORS ENVIRONMENTS, 2007. ROSE 2007. INTERNATIONAL WORKSHOP ON, IEEE, PISCATAWAY, NJ, USA, 1. Oktober 2007 (2007-10-01), Seiten 1-6, XP031155687, ISBN: 978-1-4244-1526-7
- MASAFUMI TOMINAGA ET AL: "Image Sequence Prediction for Remote Robot Control", INTELLIGENT ROBOTS AND SYSTEMS, 2006 IEEE/RSJ INTERNATIONAL CONFERENCE ON, IEEE, PI, 1. Oktober 2006 (2006-10-01), Seiten 1133-1138, XP031006228, ISBN: 978-1-4244-0258-8
- ZHENYUAN DENG ET AL: "Predictive display system for tele-manipulation using image-based modeling and rendering", PROCEEDINGS OF THE 2003 IEEE/RSJ INTERNATIONAL CONFERENCE ON INTELLIGENT ROBOTS AND SYSTEMS. (IROS 2003). LAS VEGAS, NV, OCT. 27 - 31, 2003; [IEEE/RSJ INTERNATIONAL CONFERENCE ON INTELLIGENT ROBOTS AND SYSTEMS], NEW YORK, NY : IEEE, US, Bd. 3, 27. Oktober 2003 (2003-10-27), Seiten 2797-2802, XP010675467, DOI: 10.1109/IROS.2003.1249294 ISBN: 978-0-7803-7860-5
- BEJCZY A K ET AL: "The phantom robot: predictive displays for teleoperation with time delay", PROCEEDINGS OF THE INTERNATIONAL CONFERENCE ON ROBOTICS AND AUTOMATION. CINCINNATI, MAY 13 - 18, 1990; [PROCEEDINGS OF THE INTERNATIONAL CONFERENCE ON ROBOTICS AND AUTOMATION], LOS ALAMITOS, IEEE COMP. SOC. PRESS, US, Bd. -, 13. Mai 1990 (1990-05-13), Seiten 546-551, XP010033546, DOI: 10.1109/ROBOT.1990.126037 ISBN: 978-0-8186-9061-7

## Beschreibung

### TECHNISCHES GEBIET

Die vorliegende Erfindung betrifft ein Verfahren zur Bereitstellung von Steuerbefehlen für ein mittels einer Bedieneinheit lenkbares Fahrzeug oder für eine Bilderfassungseinrichtung des Fahrzeugs mittels sequenzieller Anzeige von Bilddaten der Bilderfassungseinrichtung des Fahrzeugs auf einer Bildanzeigeeinrichtung der mit dem Fahrzeug über eine Datenübertragungsverbindung verbundenen Bedieneinrichtung. Sie betrifft weiterhin ein Steuerungssystem mit zumindest einem lenkbaren Fahrzeug, zumindest einer Bedieneinrichtung für das Fahrzeug und einer Datenübertragungseinrichtung zum Austausch von Daten und/oder Signalen zwischen dem Fahrzeug und der Bedieneinrichtung. Vorzugsweise ist das Fahrzeug ein Luftfahrzeug, wie zum Beispiel ein bewaffneter Flugkörper.

Wird ein Fahrzeug, das eine Bilderfassungseinrichtung aufweist und die erfassten Bilder an eine Bedieneinheit überträgt, an der eine Bedienperson die angezeigten Bilder sieht, von der Bedienperson aufgrund dieser Bilder gesteuert, so tritt zwischen dem Erfassen eines Bildes im Fahrzeug und der Ankunft eines Steuersignals aufgrund eines auf der Basis des erfassten und angezeigten Bildes durchgeführten Bedienerbefehls eine nicht unerhebliche Latenzzeit auf. Diese Latenzzeit kann dazu führen, dass Bedienerbefehle als Reaktion der Bedienperson auf ein aufgenommenes Bild mit deutlicher Verspätung beim Fahrzeug ankommen, sodass auf diese Weise eine Steuerung des Fahrzeugs nicht erfolgreich durchführbar ist.

Zur Lösung dieser Latenzzeitproblematik ist es bei einem Flugkörper bekannt, zwischen dem Flugkörper und der Bedieneinheit eine Datenübertragungsvorrichtung mit einem breitbandigen Datenlink vorzusehen. Dabei erhält die Bedienperson mit einer nicht wahrnehmbaren Zeitverzögerung die von der Bilderfassungseinrichtung aufgenommene Bildsequenz oder Videosequenz auf der Bildanzeigeeinrichtung der Bedieneinheit angezeigt und kann so während des Fluges des Flugkörpers beispielsweise den Zielpunkt korrigieren. Das Bild wird durch die schnelle Datenverbindung fast ohne Latenzzeit an die Bedieneinheit der Bodenstation übertragen. Während des Fluges werden die Details des Ziels für die Bedienperson immer deutlicher sichtbar. Durch die schnelle Datenverbindung können die Bilder außerdem mit einer hohen Bildwiederholfrequenz übertragen werden, sodass sich eine fast ruckelfreie Videosequenz ergibt, die der Bedienperson eine gute Basis für eine Zielkorrektur bietet. Die Datenübertragung erfolgt dabei über ein Glasfaserkabel, das von einer Spule im Flugkörper während des Fluges abgewickelt wird. Dieses Glasfaserkabel stellt somit eine physische Verbindung zwischen dem fliegenden Flugkörper und der Bedieneinheit dar. Es ist offensichtlich, dass eine derartige physische Verbindung nur über eine begrenzte Entfernung zwischen der Bedieneinheit und dem Zielpunkt aufrechterhalten werden kann. Eine Alternative zu dieser physischen Datenübertragungsverbindung mittels Glasfaserkabel oder Kupferkabel kann eine breitbandige Funkverbindung sein, die allerdings nur bei direkter Sichtverbindung zwischen der Bedieneinheit und dem Flugkörper und auch nur über verhältnismäßig kurze Entfernung realisierbar ist. Ist eine direkte Sichtverbindung zwischen der Bedieneinheit und dem fliegenden Flugkörper nicht möglich und kann oder soll kein Kabel mitgeführt werden, ist lediglich die Übertragung deutlich geringerer Datenraten über Funk möglich.

Derartige so genannte "Man-in-the-loop"-Steuerungen, bei denen eine Bedienperson das Fahrzeug auf der Grundlage von im Fahrzeug aufgenommenen Bildern fernsteuert, besitzen zwei nicht unerhebliche Vorteile. Die Bedienperson kann sich während der Annäherung des Fahrzeugs an ein Ziel oder eine Zielregion anhand der übertragenen Bilder orientieren und die Region bezüglich eines Zieles oder alternativer Ziele aufklären. Dazu kann der Bediener beispielsweise die Bilderfassungseinrichtung des Fahrzeugs über die Fernbedienung schwenken, sofern das Fahrzeug eine ausreichend lange Zeit unterwegs ist. Weiterhin hat die Bedienperson die Möglichkeit, das konkrete Ziel auszuwählen und entsprechende Bahnkorrekturen vorzunehmen. Je näher sich das Fahrzeug dem Ziel oder der Zielregion nähert, umso genauer kann das Ziel identifiziert werden. Aufgrund dieser Identifizierung kann entweder eine genauere Einweisung in Richtung Ziel erfolgen oder die Mission kann auch abgebrochen werden.

Steht anstelle einer breitbandigen Datenübertragungsverbindung nur eine schmalbandige Datenübertragungsverbindung zur Verfügung, so wird die Fernsteuerung des Fahrzeugs durch die Bedienperson schon deutlich schwieriger. bereits ein einfaches Schwenken des Suchkopfes mit der Bilderfassungseinrichtung durch den Benutzer, beispielsweise durchgeführt mittels eines Steuerknüppels an der Bedieneinheit, ist ohne zusätzliche Vorkehrungen für die Bedienperson kaum beherrschbar. Die Rückmeldung der Bewegung des Bedienknüppels, also des eingegebenen Bedienerbefehls für den Suchkopf, trifft als im Bild sichtbarer Schwenk erst mit großer Verzögerung und lange nach dem Betätigen des Steuerknüppels in der Bedieneinheit ein und wird dort auf der Bildzeigeeinrichtung folglich mit großer Verspätung angezeigt. Diese Latenzzeiten oder Reaktionszeiten können selbst bei hohen Datenkompressionsraten im Sekundenbereich liegen. Auch eine Zielauswahl, also eine Steuerung des Fahrzeugs selbst, ist auf diese Weise nicht durchführbar.

Eine Alternative zu dieser latenzzeitbehafteten "Man-in-the-loop"-Steuerung wäre der Einsatz von Trackingverfahren, das heißt einer automatischen Verfolgung des Ziels im Bild. Derartige Trackingverfahren setzen jedoch anspruchsvolle Bildverarbeitungseinrichtungen an Bord des Fahrzeugs voraus und erhöhen die Kosten des Fahrzeugs wesentlich.

Aus der Nichtpatentliteratur "Ogaki/Suzuki; Adaptive Teleoperation of a Mobile Robot under Communication Time Delay" ist eine Prädiktionssteuerung für die einem Bediener eines ferngesteuerten Roboters dargebotene Bildsequenz zur Steuerung des Roboters bekannt. Dort wird aus einem in der Vergangenheit von einer Kamera des Roboters aufgenommenen Bild unter Berücksichtigung der vom Bediener eingegebenen Richtungssteuerbefehle, der Roboterposition und von vom Roboter aufgenommenen Entfernungsmessungsdaten ein Bild berechnet, welches zum Zeitpunkt der Eingabe eines Steuerbefehls dem von der Roboterkamera tatsächlich aufgenommen Bild nahekommt. Auf diese Weise soll eine Robotersteuerung ermöglicht werden, die den Nachteil langer Laufzeiten der Steuerungssignale zum Roboter und der Bildsignale vom Roboter zum Bediener überwindet. Es soll mit dem dort beschriebenen Verfahren somit möglich sein, einen Roboter auch über große Entfernungen zu steuern.

Aus der Nichtpatentliteratur "Tominaga/Ohta; Image Sequence Prediciton for Remote Robot Control" ist ein ähnliches Verfahren bekannt. Auch bei diesem bekannten Verfahren wird ein dem Bediener dargebotenes Bild aus einem von einer am Roboter angebrachten Kamera in der Vergangenheit aufgenommenen Bild unter Berücksichtigung der aktuellen Position des Roboters, der vorherigen Roboterposition zum Zeitpunkt der Aufnahme des vorgenannten Bildes und der während des Zeitverzugs durchgeführten Roboterbewegungen berechnet. Auch dieses Verfahren dient somit einer Robotersteuerung aus der Entfernung.

Aus der Nichtpatentliteratur "Deng/Jägersand; Predictive Display System for Telemanipulation using Image-Based Modeling and Rendering" ist ebenfalls ein Verfahren zur Steuerung eines Roboters aus der Entfernung bekannt. Dort wird nach der Eingabe eines an den Roboters zu übersendenden Bedienerbefehls ein synthetisches Bild gerendert, welches dem Bediener dargeboten wird. Es handelt sich hier jedoch nicht um ein von einer Roboterkamera aufgenommenes Bild, sondern um ein synthetisch erzeugtes Bild.

Aus der US 2006/0187224 A1 ist ebenfalls die Erzeugung eines Prädiktionsbildes an einem Steuergerät für ein fernzusteuerndes Fahrzeug bekannt. Es wird dort lediglich erwähnt, dass aufgrund eines Bewegungsbefehls eine prädizierte Sicht des ferngesteuerten Fahrzeugs dem Bediener angezeigt wird.

Es ist daher die Aufgabe der vorliegenden Erfindung, ein Verfahren zur Bereitstellung von Steuerbefehlen für ein mittels einer Bedieneinheit zu einem Ziel lenkbares Fahrzeug, insbesondere einen Flugkörper, oder für eine Bilderfassungseinrichtung des Fahrzeugs mittels sequenzieller Anzeige von Bilddaten der Bilderfassungseinrichtung des Fahrzeugs auf einer Bildanzeigeeinrichtung der mit dem Fahrzeug über eine Datenübertragungsverbindung verbundenen Bedieneinrichtung anzugeben, das es auch bei schmalbandigen Datenübertragungsverbindungen gestattet, Steuerbefehle und Zielpositionskommandos zuverlässig und unter Minimierung der Auswirkungen einer Latenzzeit an das Fahrzeug zu übertragen.

Weiterhin ist es eine Aufgabe, ein Steuerungssystem mit zumindest einem lenkbaren Fahrzeug, zumindest einer Bedieneinrichtung für das Fahrzeug und einer Datenübertragungseinrichtung zum Austausch von Daten zwischen dem Fahrzeug und der Bedieneinrichtung anzugeben, das auch bei schmalbandiger Datenübertragungsverbindung eine zuverlässige Fernsteuerung des Fahrzeugs aufgrund der an die Bedieneinrichtung übertragenen Bilder ermöglicht.

Die das Verfahren betreffende Aufgabe wird durch das im Patentanspruch 1 angegebene Verfahren gelöst.

Dieses erfindungsgemäße Verfahren weist die folgenden Schritte auf:
a) Erfassen der Daten eines von der Bilderfassungseinrichtung aufgenommenen Bildes und Komprimieren der erfassten Bilddaten;
b) Erfassen von aktuellen Fahrzeug-Zustandsdaten zum Zeitpunkt der Aufnahme des Bildes im Schritt a), beinhaltend das Erfassen der die aktuelle Richtung der optischen Achse der Bilderfassungseinrichtung wiedergebenden realen Schwenkwinkel der Bilderfassungseinrichtung sowie die fahrzeugseitig durchgeführte Berechnung der Richtung und Position der optischen Achse des Bildes und die fahrzeugseitig durchgeführte Berechnung der Richtung und Position des Ziels anhand der aktuellen kommandierten Zielposition;
c) Übertragen der komprimierten Bilddaten und der erfassten Fahrzeug-Zustandsdaten beinhaltend die Richtung und Position der optischen Achse des Bildes sowie die Richtung und Position des Ziels vom Fahrzeug über die Datenübertragungsverbindung an die Bedieneinheit;
d) Dekomprimieren der übertragenen Bilddaten;
e) Anzeigen eines aus den dekomprimierten Bilddaten erhaltenen, übertragenen Bildes auf der Bildanzeigeeinrichtung;
f) Anzeigen der Richtung der optischen Achse (A) der Bilderfassungseinrichtung im angezeigten Bild;
g) Anzeigen der Bewegungsrichtung des Fahrzeugs (B) im angezeigten Bild;
h) Anzeigen der Richtung zur Position des aktuellen kommandierten Ziels (C) im angezeigten Bild;
i) Eingabe eines Bediener-Befehls für eine neue Zielposition über die Bedieneinheit durch einen Bediener;
j) Berechnung einer neuen kommandierten Zielposition auf Basis des Bediener-Befehls in der Bedieneinheit;
k) Durchführen einer Bildprädiktion des auf der Bildanzeigeeinrichtung angezeigten Bildes auf der Grundlage eines Modells der Flugkörper- und Gimbaldynamik unter Heranziehung der in Schritt j) berechneten neuen kommandierten Zielposition und der in Schritt c) empfangenen realen aktuellen optischen Achse des Bildes und der aktuellen kommandierten Zielposition in der Bedieneinheit;
l) Anzeigen des prädizierten Bildes auf der Bildanzeigeeinrichtung;
m) Übertragen der neuen kommandierten Zielposition über die Datenübertragungsverbindung an das Fahrzeug, woraufhin eine Bewegungsrichtungsänderung des Fahrzeugs bewirkt wird;
Wiederholen der Schritte a) bis h) und j) bis m) so lange wie im Schritt i) neue Bedienerbefehle eingegeben werden.

### VORTEILE

Durch das erfindungsgemäße Verfahren werden der Bedienperson auf der Bildanzeigeeinrichtung nicht die mit Verzögerung eintreffenden realen Bilder von der Bilderfassungseinrichtung angezeigt, sondern hochgerechnete hypothetische Bilder, die sich aufgrund einer Voraussage ergeben. Ein solches hypothetisches Bild beruht auf einem real aufgenommenen Ursprungsbild und wird anhand der bekannten Fahrzeug-Zustandsdaten und des eingegebenen Bedienerbefehls zu einem hypothetischen Bild umgerechnet. Es wird folglich ein Bild angezeigt, welches der aktuellen Sicht der Bilderfassungseinrichtung voraussichtlich entspricht und in welchem die Zielposition angezeigt wird, die der aktuellen Zielposition voraussichtlich entspricht.

Dieses in der Bedieneinheit der Bodenstation durchgeführte so genannte Prädiktionsverfahren und der Einsatz von hochkomprimierenden Bildkompressionsverfahren bei geringer Bildwiederholfrequenz erlauben es dem Benutzer, das Schwenken des Suchkopfes und/oder eine sichere Zielauswahl wie in Echtzeitbetrachtung der von der Bilderfassungseinrichtung aufgenommenen Szene durchzuführen. Die in der Realität existierende Latenzzeit wirkt sich dabei nahezu nicht auf die Stabilität des Lenkregelkreises aus. Da auf der Seite des Fahrzeugs außer der Datenkompression zur Bildübertragung keine Bildverarbeitungsverfahren benötigt werden, führt das erfindungsgemäße Verfahren zu einer sehr kostengünstigen Fernsteuerungsmöglichkeit des Fahrzeugs. Voraussetzung dafür ist lediglich die Verfügbarkeit von Navigationsinformationen auf Seiten des Fahrzeugs.

Weitere bevorzugte und vorteilhafte Ausgestaltungsmerkmale des erfindungsgemäßen Verfahrens sind in den Unteransprüchen 2 bis 5 angegeben.

Eine bevorzugte Weiterbildung des Verfahrens zeichnet sich dadurch aus, dass die Fahrzeug-Zustandsdaten die zum Zeitpunkt der Aufnahme des Bildes navigierte Position des Fahrzeugs, die Lage zumindest der Längsachse des Fahrzeugs und deren Ausrichtung zum Zeitpunkt der Aufnahme des Bildes enthalten.

Weiter vorteilhaft ist es, wenn die Fahrzeug-Zustandsdaten Daten der Richtung der optischen Achse der Bilderfassungseinrichtung und von deren Blickrichtung enthalten.

Dabei ist es besonders von Vorteil, wenn die Daten der Richtung der optischen Achse, vorzugsweise als Eulerwinkel, Quaternionen oder Transformationsmatrizen, erfasst und übertragen werden. Liegt eine auf dem Fahrzeug schwenkbare Bilderfassungseinrichtung vor, so ist es von Vorteil, die gemessenen Schwenkwinkel (Gimbalwinkel) zu erfassen und übertragen.

Bei einer weiteren bevorzugten Ausführungsform des erfindungsgemäßen Verfahrens wird die Richtung zur Zielposition und/oder die Richtung der optischen Achse und/oder die Richtung der Bewegungsrichtung des Fahrzeugs im Bild als Fadenkreuz angezeigt.

Vorteilhaft ist es auch, wenn im Schritt i) die optische Achse der Bilderfassungseinrichtung in Richtung auf die Zielposition eingestellt wird oder ist.

Der das Steuerungssystem betreffende Teil der Aufgabe wird gelöst durch das Steuerungssystem mit den Merkmalen des Patentanspruchs 5.

Das erfindungsgemäße Steuerungssystem umfasst zumindest ein lenkbares Fahrzeug, zumindest eine Bedieneinheit für das Fahrzeug und eine Datenübertragungseinrichtung zum Austausch von Daten und/oder Signalen zwischen dem Fahrzeug und der Bedieneinheit. Das Fahrzeug weist zumindest einen mit einer Bilderfassungseinrichtung versehenen Suchkopf, eine Bildsignalverarbeitungseinrichtung, eine fahrzeugseitige Sende- und Empfangseinheit sowie eine Steuerungseinrichtung für das Fahrzeug auf. Die Bedieneinheit weist eine bedieneinheitsseitige Sende- und Empfangseinheit, eine Signalverarbeitungseinrichtung, eine Bildanzeigeinrichtung und eine Befehlseingabeeinrichtung auf. Der fahrzeugseitige Sende- und Empfangseinheit ist eine Datenkompressionseinrichtung und der bedieneinheitsseitigen Sende- und Empfangseinheit eine Datendekompressionseinrichtung zugeordnet und die Signalverarbeitungseinrichtung der Bedieneinheit ist so ausgestaltet, dass sie von der Bilderfassungseinrichtung des Fahrzeugs empfangene Bilddaten zeitlich aufeinander folgender Bilder an die Bildanzeigeeinrichtung weiterleitet, wobei die Bedieneinheitund das Fahrzeug zur Durchführung des erfindungsgemäßen Verfahrens ausgebildet sind.

Ein derartiges Steuerungssystem, das nach dem erfindungsgemäßen Verfahren arbeitet, stellt eine kostengünstige Fernsteuerung des Fahrzeugs durch eine menschliche Bedienperson von einer die Bedieneinrichtung aufweisenden Bedienstation dar.

Vorzugsweise ist das Fahrzeug ein Luftfahrzeug, wie beispielsweise ein bewaffneter Flugkörper, der von einer Bodenstation ferngesteuert wird.

Bei diesem Steuerungssystem sind die eingangs genannten Vorteile der Fernsteuerung nach dem "Man-in-the-loop"-Verfahren verwirklicht. Die Bedienperson kann sich folglich während der Fahrt beziehungsweise während des Fluges durch Schwenken der Bilderfassungseinrichtung orientieren. Sie kann weiterhin bei der Annäherung an ein Ziel Bahnkorrekturen aufgrund des auf der Bildanzeigeeinrichtung dargestellten Bildes oder sogar einen Missionsabbruch durchführen.

Das erfindungsgemäße Steuerungssystem bildet, wenn das Fahrzeug bewaffnet ist, vorzugsweise von einem bewaffneten Flugkörper gebildet ist, ein neuartiges Waffensystem.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Prinzipdarstellung des erfindungsgemäßen Steuerungssystems mit dem Funktionsablauf des erfindungsgemäßen Verfahrens beim Schwenken der Bilderfassungseinrichtung am Beispiel eines Flugkörpers;
- Fig. 2A und 2B: eine Prinzipdarstellung der vom erfindungsgemäßen Verfahren bewirkten Bildprädiktion;
- Fig. 3: eine schematische Prinzipdarstellung des erfindungsgemäßen Steuerungssystems mit dem Funktionsablauf des erfindungsgemäßen Verfahrens bei einer Änderung der Bahn des Fahrzeugs am Beispiel eines Flugkörpers; und
- Fig. 4A und 4B: eine Bildanzeige vor und nach Abgabe eines Schwenkkommandos.

### DARSTELLUNG VON BEVORZUGTEN AUSFÜHRUNGSBEISPIELEN

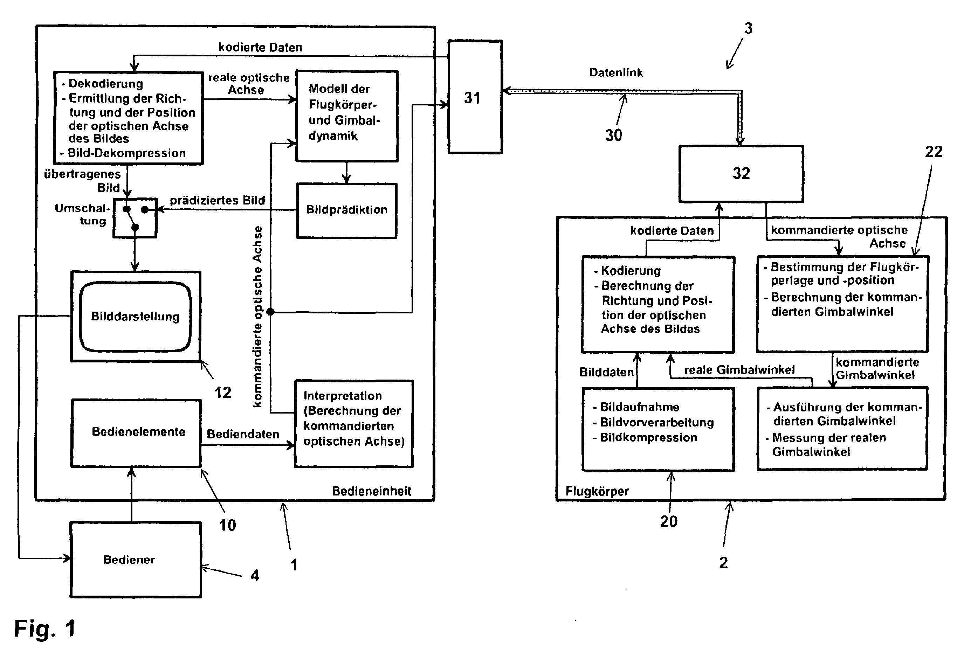

Fig. 1 zeigt ein Prinzipschaltbild eines erfindungsgemäßen Steuerungssystems am Beispiel eines bewaffneten Flugkörpers. Das Steuerungssystem besteht aus einem Flugkörper 2 und einer Bedieneinheit 1 zur Fernsteuerung des Flugkörpers 2. Fig. 1 gibt den Signalfluss und den Funktionsablauf wieder, der bei der Eingabe eines Schwenkbefehls für die Bilderfassungseinrichtung gemäß dem erfindungsgemäßen Verfahren erfolgt.

Die Bedieneinheit 1 ist mit dem Flugkörper 2 über eine als Datenlink oder auch als Datenübertragungsverbindung bezeichnete Datenkommunikationsverbindung 3 zum gegenseitigen Austausch von Daten und/oder Signalen verbunden.

Die Datenkommunikationsverbindung 3 umfasst eine der Bedieneinheit 1 zugeordnete erste Sende- und Empfangseinrichtung 31, eine dem Flugkörper 2 zugeordnete zweite Sende- und Empfangseinrichtung 32, sowie eine drahtlose Übertragungsstrecke 30 für die Daten und/oder Signale.

Eine als Bediener 4 bezeichnete Bedienperson bedient die Bedienstation 2, die unter anderem Bedienelemente einer Befehlseingabeeinrichtung 10, wie beispielsweise ein Eingabeinstrument (zum Beispiel einen Steuerknüppel oder Joystick), enthält und der eine Bildanzeigeeinrichtung 12 zugeordnet ist.

Der Flugkörper 2 weist eine Bilderfassungseinrichtung 20 auf, die einen Aufnahmesensor zur Bildaufnahme, beispielweise eine Kamera, sowie einen Computer zur Bildverarbeitung und zur Bilddatenkompression enthält. Die Bilderfassungseinrichtung 20 oder deren Kamera ist in bekannter Weise schwenkbar in der Nase des Flugkörpers angeordnet.

Des Weiteren ist der Flugkörper 2 mit einer Navigationseinrichtung versehen, die Bestandteil einer Einrichtung 22 zur Ermittlung von Flugkörper-Zustandsdaten ist.

Diese Einrichtung 22 zur Ermittlung von Flugkörper-Zustandsdaten enthält geeignete Sensoren zur Bestimmung von zumindest der Flugkörperlage und der Flugrichtung, und kann über die Navigationseinrichtung die aktuelle Position des Flugkörpers bestimmen. Der Flugkörper 2 ist darüber hinaus mit einem - nicht gezeigten - Bordcomputer versehen, der in der Lage ist, Berechnungen zur Steuerung des Flugkörpers und zur Steuerung der Bilderfassungseinrichtung durchzuführen.

Die Bilderfassungseinrichtung 20 des Flugkörpers nimmt ein Bild auf. Dieses Bild wird dann entweder im Computer der Bilderfassungseinrichtung 20 oder im Bordcomputer verarbeitet und gegebenenfalls optimiert, beispielsweise mittels einer Kontrastkorrektur. Anschließend werden die Daten dieses aufbereiteten Bildes für die Datenübertragung komprimiert.

Parallel zur Bildaufnahme erfolgt im Zeitpunkt der Bildaufnahme eine Erfassung von Flugkörper-Zustandsdaten. Diese Flugkörper-Zustandsdaten umfassen zumindest die navigierte Position des Flugkörpers und dessen Fluglage und Flugsicherung, die Zielposition und bei einem schwenkbaren Aufnahmesensor der Bilderfassungseinrichtung auch die an den Schwenkachsen gemessenen Gimbalwinkel, das heißt die Neigungen der optischen Achse des Aufnahmesensors der Bilderfassungseinrichtung 20 relativ zu den flugkörperfesten Achsen. Die hieraus gewonnene Information über die Richtung und die Position der optischen Achse des aufgenommenen Bildes wird zusammen mit den komprimierten Bilddaten verschlüsselt und als kodierter Datenstrom von der zweiten Sende-/Empfangseinrichtung 32 über die drahtlose Übertragungsstrecke 30 an die erste Sende-/Empfangseinrichtung 31 und von dort an der Bedienstation 1 übertragen.

In der Bedienstation 1 werden die ankommenden kodierten Daten zunächst dekodiert und die Richtung und die Position der optischen Achse des Bildes werden ermittelt. Die in den empfangenen Daten enthaltenen Bilddaten werden anschließend dekomprimiert und auf der Bildwiedergabeeinrichtung 12 dem Bediener 4 dargestellt. Vorzugsweise werden in das dargestellte Bild zusätzliche Informationen eingeblendet, wie zum Beispiel die Richtung der optischen Achse in Form eines Fadenkreuzes. Dadurch wird die Bedienbarkeit und somit die Steuerbarkeit des Flugkörpers beziehungsweise der schwenkbaren Bilderfassungseinrichtung 20 erleichtert.

Betätigt der Bediener 4 den Steuerknüppel der Bedienelemente 10 zum Zweck der Schwenkung der Bilderfassungseinrichtung 20 beziehungsweise des Aufnahmesensors der Bilderfassungseinrichtung, so laufen die nachstehend beschriebenen Prozesse in der Bedieneinheit ab.

Zunächst wird das vom Flugkörper gesendete Bild auf der Bildanzeigeeinrichtung 12 der Bedieneinheit 1 dargestellt. Aus den empfangenen Flugkörper-Zustandsdaten wird die Richtung der optischen Achse des übertragenen Bildes ermittelt. Aufgrund der Latenzzeit bei der Datenübertragung vom Flugkörper 2 über die Datenübertragungsverbindung 3 zur Bedieneinheit 1 entsprechen das dargestellte Bild und die ermittelte optische Achse nicht dem Echtzeit-Zustand, sondern einem zeitlich zurückliegenden Zustand.

Gibt der Bediener 4 nun über den Steuerknüppel ein Kommando zum Schwenken der optischen Achse der Bilderfassungseinrichtung beziehungsweise von deren Aufnahmesensor, so würde es wieder eine Zeit lang dauern, bis das aus der Schwenkbewegung resultierende Bild auf der Bildanzeigeeinrichtung angezeigt würde. Diese Latenz führt zu einer hohen Totzeit im Regelkreis zwischen Bediener 4, der Steuerung und der Bewegung der Bilderfassungseinrichtung 20.

Zur Kompensation dieser Latenz ermittelt die Bedieneinheit auf der Basis der über den Steuerknüppel der Bedienelemente 10 eingegebenen Bediendaten die Richtung der kommandierten optischen Achse und die Differenz zur optischen Achse des aktuell von der Bildanzeigeeinrichtung 12 dargestellten Bildes. In der Bedieneinheit 1 ist ein Modell der Flugkörperdynamik und der Gimbaldynamik, also der Dynamik der Schwenkbewegungen der Bilderfassungseinrichtung beziehungsweise von deren Aufnahmesensor, implementiert. Anhand dieses Bewegungsmodells wird in einem Computer der Bedieneinheit auf der Grundlage der realen optischen Achse des angezeigten Bildes und der berechneten kommandierten optischen Achse die zum gegenwärtigen Zeitpunkt vorliegende optische Achse geschätzt und das aktuellste vom Flugkörper 2 empfangene Bild wird entsprechend dieser geschätzten realen optischen Achse transformiert. Diese so genannte Bildprädiktion liefert ein prädiziertes (geschätztes) Bild, das dann anstelle des zuletzt übertragenen Bildes von der Bildanzeigeeinrichtung 12 angezeigt wird.

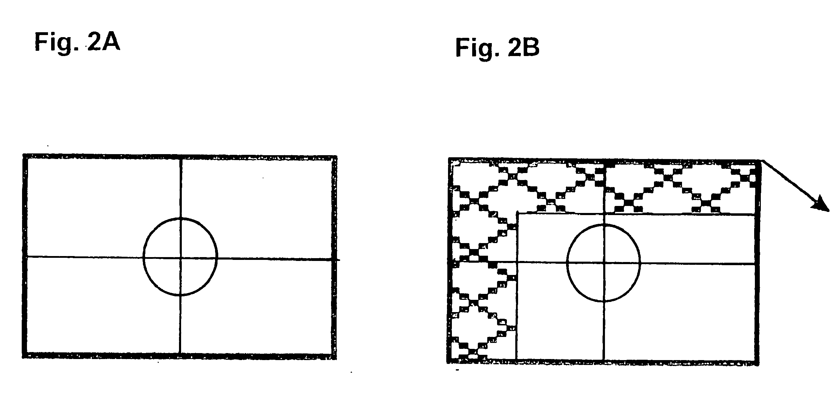

Im einfachsten Fall kann diese Bildprädiktion durch Verschieben und gegebenenfalls Skalieren des zuletzt empfangenen Bildes erfolgen. Die dabei fehlenden Bildteile, die im ursprünglichen Bild nicht sichtbar gewesen sind, werden auf geeignete Weise ergänzt, beispielsweise durch einfarbige Balken oder durch eine Gitterstruktur, wie in der Beispieldarstellung der Fig. 2A und 2B gezeigt ist.

Fig. 2A zeigt ein empfangenes Bild und Fig. 2B ein prädiziertes Bild, das durch Verschieben des empfangenen Bildes nach rechts unten entstanden ist. Der Bereich des prädizierten Bildes, für den keine reale Bildinformation vorliegt, wurde in der Darstellung der Fig. 2B durch eine Gitterstruktur ersetzt.

Die Abfrage neuer Bedienkommandos und die Prädiktionsdarstellung des jeweiligen prädizierten Bildes werden kontinuierlich wiederholt. Dadurch erhält der Bediener ein direktes optisches Feedback auf seine Benutzereingriffe, also auf seine über die Bedienelemente 10 eingegeben Bedienerbefehle. Aus diesen Bedienerbefehlen oder Bedienkommandos werden Steuerbefehle in Form der Daten für die kommandierte optische Achse ermittelt und über die Datenübertragungsverbindung 3 an den Flugkörper 2 übertragen.

Der Flugkörper bestimmt zunächst die eigene Flugkörperlage und Flugkörperposition mittels seiner Navigationseinrichtung und errechnet aus dieser navigierten Flugkörperlage und aus der empfangenen kommandierten optischen Achse die neuen kommandierten Gimbalwinkel für die schwenkbare Bilderfassungseinrichtung 20 beziehungsweise für deren schwenkbaren Aufnahmesensor. Anschließend wird auf der Basis dieser neuen kommandierten Gimbalwinkel eine Schwenkung der Bilderfassungseinrichtung 20 beziehungsweise von deren Aufnahmesensor durchgeführt.

Wesentlich bei diesem erfindungsgemäßen Prinzip ist die asynchrone Realisierung, die die Latenzzeitproblematik abmildert. Sobald ein neues übertragenes Bild vorliegt, wird dieses das prädizierte Bild ersetzen. Da das neu empfangene Bild dem vorher angezeigten prädizierten Bild ähnelt, wird der optisch wahrnehmbare Bildsprung gering sein und der Bediener wird in seiner Bedientätigkeit nicht behindert. Im Idealfall werden dann lediglich die im prädizierten Bild fehlenden Bildteile ergänzt. Analog kann im Flugkörper ein neues Bild aufgenommen werden, auch während das letzte Bedienerkommando noch nicht vollständig an den Flugkörper übertragen und dort realisiert wurde. Dazu ist es erforderlich, mit dem Bild stets die gemessenen (also die im Moment der Bildaufnahme vorliegenden) Gimbalwinkel oder unter Verwendung der navigierten Flugkörperlage die daraus errechnete aktuelle Richtung der optischen Achse zu übertragen.

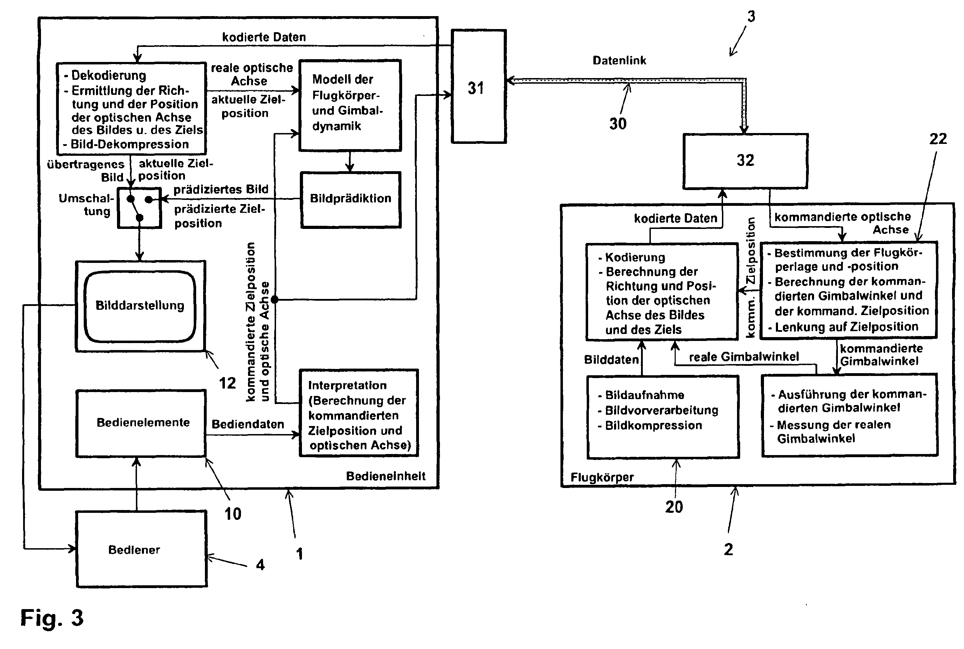

Anhand der Fig. 3 wird nachfolgend ein Beispiel angegeben, bei welchem die vom Bediener 4 über die Bedienelemente 10 eingegebenen Bedienerbefehle der Änderung der Flugbahn dienen, wenn der Flugkörper beispielsweise ein neues Ziel anfliegen soll oder wenn die Flugrichtung zum Ziel korrigiert werden soll. Die Vorgehensweise und der Verfahrenslauf sind im wesentlichen die gleichen wie bei der Verschwenkung der optischen Achse der Bilderfassungseinrichtung 20, wie sie im Zusammenhang mit der Fig. 1 beschrieben worden ist.

Auch hier kann zwischen dem übertragenen und von der Bildanzeigeeinrichtung 12 angezeigten Bild und der im Flugkörper zum Anzeigezeitpunkt vorliegenden Zielinformation eine deutliche Latenzzeit vorliegen.

Zusätzlich zu den Daten der optischen Achse des Aufnahmesensors beziehungsweise der Bilderfassungseinrichtung 20 wird bei dieser Realisierungsform des erfindungsgemäßen Verfahrens die durch den Bedienerbefehl, den der Bediener 4 über die Bedienelemente 10 in die Bedieneinheit 1 eingibt, bestimmte kommandierte Richtung zum Ziel übertragen. Auf der Anzeigeeinrichtung 12 der Bedieneinheit 1 werden die Richtung der optischen Achse und die Richtung zum Ziel, beispielsweise als Fadenkreuze, angezeigt. Der Bediener 4 kann beide Richtungen mittels der Bedienelemente 10 beeinflussen. Befindet sich das Ziel nicht in Richtung der optischen Achse, also nicht in der Bildmitte, wird die Zielposition von Bild zu Bild springen und letztlich aus dem Bild wandern. Dies erschwert die Korrektur der Zielposition durch den Bediener erheblich. Daher ist es während des Endanflugs sinnvoll, die optische Achse des Suchkopfs in Richtung der geplanten Zielposition zu regeln.

Der vom Bediener 4 über die Bedienelemente 10 eingegebene Bedienerbefehl für die Zielposition wird in der Bedieneinheit 1 zunächst zur Berechnung einer kommandierten Zielposition herangezogen. Diese kommandierte Zielposition wird dann zusammen mit der vom Flugkörper 2 empfangenen aktuellen Zielposition der Bildprädiktionsberechnung auf der Grundlage des Modells der Flugkörperdynamik und der Gimbaldynamik unterzogen. Das daraufhin erhaltene prädizierte Bild wird, wie im Beispiel der Fig. 1, auf der Bildanzeigeeinrichtung 12 dargestellt. Zugleich werden die Daten der kommandierten Zielposition, also die kommandierte Richtung vom Flugkörper 2 zum Ziel, über die Datenübertragungsverbindung 3 zum Flugkörper 2 übertragen. Dort wird in der Einrichtung 22 zur Ermittlung von Flugkörper-Zustandsdaten aufgrund der übertragenen kommandierten Richtung vom Flugkörper zur Zielposition die kommandierte Zielposition berechnet und zur Berechnung der Position des Ziels im aufgenommenen Bild herangezogen. Diese die Position des Ziels beinhaltenden Bilddaten werden dann wie im Beispiel der Fig. 1 zur Bedieneinheit übertragen.

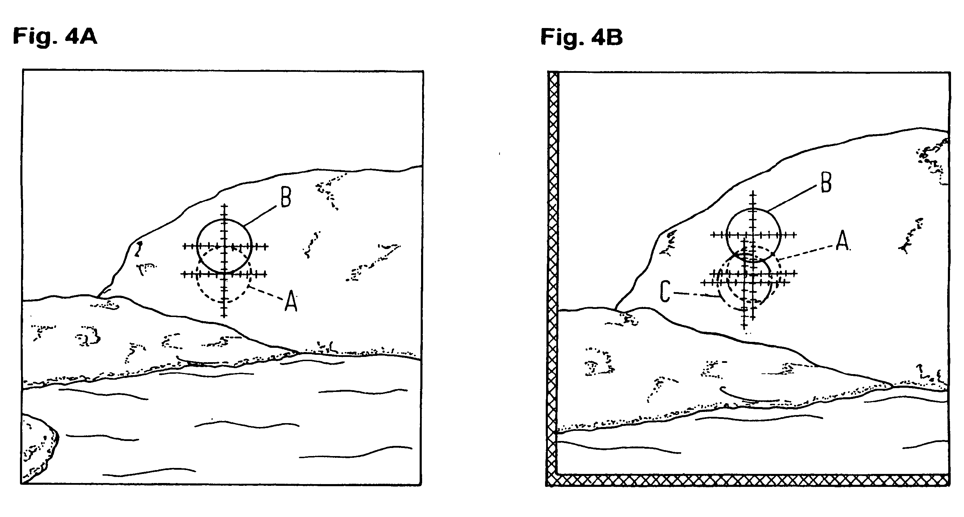

In den Fig. 4A und 4B ist anhand eines von der Bilderfassungseinrichtung 20 des Flugkörpers 2 aufgenommenen realen Bildes (Fig. 4A) und eines prädizierten Bildes (Fig. 4B) eine Prädiktion der Darstellung einer sich verändernden Zielposition gezeigt.

In Fig. 4A ist die Richtung der optischen Achse der Bilderfassungseinrichtung 20 (Bildmitte) durch ein erstes Fadenkreuz A markiert und die Flugrichtung des Flugkörpers, die dem Geschwindigkeitsvektor des Flugkörpers entspricht, durch ein zweites Fadenkreuz B markiert. Die optische Achse der Bilderfassungseinrichtung 20 ist auf das anzufliegende Ziel gerichtet und stimmt folglich in diesem Beispiel mit dem vom Flugkörper auf das Ziel gerichteten Zielvektor überein. Der Geschwindigkeitsvektor des Flugkörpers (Fadenkreuz B) weicht während des Fluges auf Grund der gewählten Flugbahn (zum Beispiel einer ballistischen Bahn) von der optischen Achse beziehungsweise dem Zielvektor ab. Gegen Ende des Fluges wird sich auch Fadenkreuz B in die Bildmitte bewegen.

In Fig. 4B ist weiterhin durch ein drittes Fadenkreuz C die Richtung auf ein vom Bediener anvisiertes und über die Betätigung der Bedieneinheit ausgewähltes neues Ziel angezeigt. Bei dem hier simulierten Flugkörper schwenkt der mit der Bilderfassungseinrichtung 20 versehene Suchkopf (und mit ihm letztlich der gesamte Flugkörper) in Richtung des anvisierten neuen Ziels.

Wird das Bild für eine neue Zieleinweisung geschwenkt (Fig. 4B), so wird das Fadenkreuz A, das die bisherige optische Achse repräsentiert hat und daher in Fig. 4A deckungsgleich mit dem Fadenkreuz C ist, aus der Bildmitte des prädizierten Bildes wandern. Nach einiger Zeit wird der Suchkopf die vorsimulierte Schwenkbewegung tatsächlich durchführen und das zugehörige Fadenkreuz A wird sich wieder in die Bildmitte bewegen.

Im Idealfall (Fig. 4A) stimmen also das Fadenkreuz A und das Fadenkreuz C überein und gegen Ende des Fluges wird sich auch Fadenkreuz B in die Bildmitte bewegen.

Auch wenn die Erfindung in den Ausführungsbeispielen an Hand eines Flugkörpers als Fahrzeug beschrieben worden ist, so sind das erfindungsgemäße Verfahren und die erfindungsgemäße Steuerungseinrichtung auch mit anderen Fahrzeugen, wie beispielsweise Landfahrzeugen, Wasserfahrzeugen oder Weltraumfahrzeugen realisierbar.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Bedieneinheit
- 2: Flugkörper (Fahrzeug)
- 3: Datenübertragungsverbindung
- 4: Bedienperson oder Bediener

- 10: Befehlseingabeeinrichtung
- 12: Bildanzeigeeinrichtung

- 20: Bilderfassungseinrichtung
- 22: Einrichtung zur Ermittlung von Flugkörper-Zustandsdaten

- 30: Übertragungsstrecke
- 31: erste Sende- und Empfangseinrichtung
- 32: zweite Sende- und Empfangseinrichtung

## Patentansprüche

1. Verfahren zur Bereitstellung von Steuerbefehlen für ein mittels einer Bedieneinheit (1) zu einem Ziel lenkbares Fahrzeug (2), wobei sich das Ziel an einer in einer kommandierten Richtung gelegenen kommandierten Zielposition befindet, mittels sequenzieller Anzeige von Bilddaten einer Bilderfassungseinrichtung (20) des Fahrzeugs (2) auf einer Bildanzeigeeinrichtung (12) der mit dem Fahrzeug (2) über eine Datenübertragungsverbindung (3) verbundenen Bedieneinheit (1), wobei die Bilderfassungseinrichtung (20) eine optische Achse aufweist, die auch als Blickrichtung bezeichnet wird, mit den Schritten:
a) Erfassen der Daten eines von der Bilderfassungseinrichtung (20) aufgenommenen Bildes und Komprimieren der erfassten Bilddaten;
b) Erfassen von aktuellen Fahrzeug-Zustandsdaten zum Zeitpunkt der Aufnahme des Bildes im Schritt a), beinhaltend das Erfassen der die aktuelle Richtung der optischen Achse der Bilderfassungseinrichtung (20) wiedergebenden realen Schwenkwinkel der Bilderfassungseinrichtung (20) sowie die fahrzeugseitig durchgeführte Berechnung der Richtung und Position der optischen Achse des Bildes und die fahrzeugseitig durchgeführte Berechnung der Richtung und Position des Ziels anhand der aktuellen kommandierten Zielposition;
c) Übertragen der komprimierten Bilddaten und der erfassten Fahrzeug-Zustandsdaten beinhaltend die Richtung und Position der optischen Achse des Bildes sowie die Richtung und Position des Ziels vom Fahrzeug über die Datenübertragungsverbindung an die Bedieneinheit (1);
d) Dekomprimieren der übertragenen Bilddaten;
e) Anzeigen eines aus den dekomprimierten Bilddaten erhaltenen, übertragenen Bildes auf der Bildanzeigeeinrichtung (12);
f) Anzeigen der Richtung der optischen Achse (A) der Bilderfassungseinrichtung (20) im angezeigten Bild;
g) Anzeigen der Bewegungsrichtung des Fahrzeugs (B) im angezeigten Bild;
h) Anzeigen der Richtung zur Position des aktuellen kommandierten Ziels (C) im angezeigten Bild;
i) Eingabe eines Bediener-Befehls für eine neue Zielposition über die Bedieneinheit (1) durch einen Bediener;
j) Berechnung einer neuen kommandierten Zielposition auf Basis des Bediener-Befehls in der Bedieneinheit (1);
k) Durchführen einer Bildprädiktion des auf der Bildanzeigeeinrichtung (12) angezeigten Bildes auf der Grundlage eines Modells der Flugkörper- und Gimbaldynamik unter Heranziehung der in Schritt j) berechneten neuen kommandierten Zielposition und der in Schritt c) empfangenen realen aktuellen optischen Achse des Bildes und der aktuellen kommandierten Zielposition in der Bedieneinheit;
l) Anzeigen des prädizierten Bildes auf der Bildanzeigeeinrichtung (12);
m) Übertragen der neuen kommandierten Zielposition über die Datenübertragungsverbindung an das Fahrzeug (2), woraufhin eine Bewegungsrichtungsänderung des Fahrzeugs (2) bewirkt wird;
Wiederholen der Schritte a) bis h) und j) bis m) so lange wie im Schritt i) neue Bedienerbefehle eingegeben werden.

2. Verfahren nach Anspruch 1,
**dadurch gekennzeichnet,**
**dass** die Fahrzeug-Zustandsdaten die zum Zeitpunkt der Aufnahme des Bildes navigierte Position des Fahrzeugs (2), die Lage zumindest der Längsachse des Fahrzeugs (2) zum Zeitpunkt der Aufnahme des Bildes und deren Ausrichtung zum Zeitpunkt der Aufnahme des Bildes enthalten.

3. Verfahren nach einem der vorhergehenden Ansprüche,
**dadurch gekennzeichnet,**
**dass** die Richtung (C) zur Zielposition und/oder die Richtung (A) der optischen Achse und/oder die Richtung (B) der Bewegungsrichtung des Fahrzeugs im Bild als Fadenkreuz angezeigt wird.

4. Verfahren nach einem der vorhergehenden Ansprüche,
**dadurch gekennzeichnet,**
**dass** im Schritt i) die Richtung (A) der optischen Achse der Bilderfassungseinrichtung (20) in Richtung (C) auf die Zielposition eingestellt wird.

5. Steuersystem mit zumindest einem lenkbaren Fahrzeug (2), zumindest einer Bedieneinheit (1) für das Fahrzeug (2) und einer Datenübertragungseinrichtung (3) zum Austausch von Daten und/oder Signalen zwischen dem Fahrzeug (2) und der Bedieneinheit (1),
- wobei das Fahrzeug (2) zumindest einen mit einer Bilderfassungseinrichtung (20) versehenen Suchkopf, eine Bildsignalverarbeitungseinrichtung, eine fahrzeugseitige Sende- und Empfangseinheit (32) sowie eine Steuerungseinrichtung für das Fahrzeug (2) aufweist;
- wobei die Bedieneinheit (1) eine bedieneinheitsseitige Sende- und Empfangseinheit (31), eine Signalverarbeitungseinrichtung, eine Bildanzeigeinrichtung (12) und eine Befehlseingabeeinrichtung (10) aufweist;
- wobei der fahrzeugseitigen Sende- und Empfangseinheit (32) eine Datenkompressionseinrichtung und der bedieneinheitsseitigen Sende- und Empfangseinheit (31) eine Datendekompressionseinrichtung zugeordnet ist und
- wobei die Signalverarbeitungseinrichtung der Bedieneinheit (1) so ausgestaltet ist, dass sie von der Bilderfassungseinrichtung (20) des Fahrzeugs (2) empfangene Bilddaten zeitlich aufeinander folgender Bilder an die Bildanzeigeeinrichtung (12) weiterleitet;
- wobei die Bedieneinheit (1) und das Fahrzeug (2) zur Durchführung des Verfahrens nach Anspruch 1 ausgebildet sind.

## Claims

1. Method for providing control commands for a vehicle (2) which can be steered to a target using an operating unit (1), the target being situated at a commanded target position in a commanded direction, by sequentially displaying image data from an image capture device (20) of the vehicle (2) on an image display device (12) of the operating unit (1) connected to the vehicle (2) via a data transmission connection (3), the image capture device (20) having an optical axis which is also referred to as the viewing direction, having the steps of:
a) acquiring the data relating to an image recorded by the image capture device (20) and compressing the acquired image data;
b) acquiring current vehicle state data at the time at which the image is recorded in step a), comprising sensing the actual pivot angle of the image capture device (20) representing the current direction of the optical axis of the image capture device (20) and calculating the direction and position of the optical axis of the image in the vehicle and calculating the direction and position of the target in the vehicle using the current commanded target position;
c) transmitting the compressed image data and the acquired vehicle state data containing the direction and position of the optical axis of the image and the direction and position of the target from the vehicle to the operating unit (1) via the data transmission connection;
d) decompressing the transmitted image data;
e) displaying a transmitted image obtained from the decompressed image data on the image display device (12);
f) indicating the direction of the optical axis (A) of the image capture device (20) in the displayed image;
g) indicating the direction of movement of the vehicle (B) in the displayed image;
h) indicating the direction to the position of the current commanded target (C) in the displayed image;
i) inputting an operator command for a new target position by an operator via the operating unit (1) ;
j) calculating a new commanded target position on the basis of the operator command in the operating unit (1);
k) predicting the image displayed on the image display device (12) on the basis of a model of the missile and gimbal dynamics using the new commanded target position calculated in step j) and the actual current optical axis of the image received in step c) and the current commanded target position in the operating unit;
l) displaying the predicted image on the image display device (12);
m) transmitting the new commanded target position to the vehicle (2) via the data transmission connection, whereupon the direction of movement of the vehicle (2) is changed;
repeating steps a) to h) and j) to m) as long as new operator commands are input in step i).

2. Method according to Claim 1,
**characterized in that**
the vehicle state data contain the position of the vehicle (2) navigated at the time at which the image is recorded, the position of at least the longitudinal axis of the vehicle (2) at the time at which the image is recorded and the orientation of said longitudinal axis at the time at which the image is recorded.

3. Method according to one of the preceding claims,
**characterized in that**
the direction (C) to the target position and/or the direction (A) of the optical axis and/or the direction (B) of the direction of movement of the vehicle is/are indicated in the image as crosshairs.

4. Method according to one of the preceding claims,
**characterized in that**
the direction (A) of the optical axis of the image capture device (20) is set in the direction (C) of the target position in step i).

5. Control system having at least one steerable vehicle (2), at least one operating unit (1) for the vehicle (2) and a data transmission device (3) for interchanging data and/or signals between the vehicle (2) and the operating unit (1),
- the vehicle (2) having at least one seeker head provided with an image capture device (20), an image signal processing device, a transmitting and receiving unit (32) in the vehicle and a control device for the vehicle (2);
- the operating unit (1) having a transmitting and receiving unit (31) in the operating unit, a signal processing device, an image display device (12) and a command input device (10);
- a data compression device being assigned to the transmitting and receiving unit (32) in the vehicle and a data decompression device being assigned to the transmitting and receiving unit (31) in the operating unit, and
- the signal processing device of the operating unit (1) being configured in such a manner that it forwards image data relating to temporally successive images, which are received from the image capture device (20) of the vehicle (2), to the image display device (12);
- the operating unit (1) and the vehicle (2) being designed to carry out the method according to Claim 1.

## Revendications

1. Procédé destiné à mettre à disposition des instructions de conduite pour un véhicule (2) susceptible d'être dirigé vers un but au moyen d'une unité de commande (1), le but se trouvant dans une position de but commandée, située dans une direction commandée, au moyen d'un affichage séquentiel de données-images d'un système de capture (20) d'images du véhicule (2) sur un système d'affichage (12) d'images de l'unité de commande (1) reliée avec le véhicule (2) par l'intermédiaire d'une liaison de transfert de données (3), le système de capture (20) d'images comportant un axe optique qui est également appelé direction de visée, comportant les étapes :
a) capture des données d'une image enregistrée par le système de capture (20) d'images et compression des données-images capturées ;
b) capture de données actuelles d'état du véhicule à l'instant de l'enregistrement de l'image dans l'étape a), comprenant la capture des angles de pivotement réels du système de capture (20) d'images reproduisant la direction actuelle de l'axe optique du système de capture (20) d'images, ainsi que le calcul réalisé côté véhicule de la direction et de la position de l'axe optique de l'image et le calcul réalisé côté véhicule de la direction et de la position du but, à l'aide de la position actuelle du but commandée ;
c) transfert à l'unité de commande (1) des données-images compressées et des données capturées d'état du véhicule, comprenant la direction et la position de l'axe optique de l'image, ainsi que la direction et la position du but du véhicule par l'intermédiaire de la liaison de transfert de données ;
d) décompression des données-images transférées ;
e) affichage sur le système d'affichage (12) d'images d'une image transférée, obtenue à partir des données-images décompressées ;
f) affichage de la direction de l'axe optique (A) du système de capture (20) d'images dans l'image affichée ;
g) affichage du sens de déplacement du véhicule (B) dans l'image affichée ;
h) affichage de la direction vers la position du but (C) actuel commandé dans l'image affichée ;
i) saisie par l'opérateur d'une instruction opérateur pour une nouvelle position d'un but par l'intermédiaire de l'unité de commande (1) ;
j) calcul d'une nouvelle position de but commandée sur la base de l'instruction opérateur dans l'unité de commande (1) ;
k) réalisation d'une prédiction d'image pour l'image affichée sur le système d'affichage (12) d'image sur la base d'un modèle de la dynamique des missiles et des gimbals, en ayant recours à la nouvelle position commandée du but calculée dans l'étape j) et de l'axe optique actuel réel de l'image réceptionné dans l'étape c) et de la position actuelle commandée du but dans l'unité de commande ;
l) affichage de l'image prédite sur le système d'affichage (12) d'images ;
m) transfert de la nouvelle position commandée du but par l'intermédiaire de la liaison de transfert de données au véhicule (2), suite à quoi, une modification du sens de déplacement du véhicule (2) est provoquée ;
répétition des étapes a) à h) et j) à m) aussi longtemps que dans l'étape i) sont saisies de nouvelles instructions opérateur.

2. Procédé selon la revendication 1
**caractérisé en ce que** les données d'état du véhicule comprennent la position du véhicule (2) naviguée à l'instant de l'enregistrement de l'image, l'emplacement d'au moins l'axe longitudinal du véhicule (2) à l'instant de l'enregistrement de l'image et son orientation à l'instant de l'enregistrement de l'image.

3. Procédé selon l'une quelconque des revendications précédentes,
**caractérisé en ce que** la direction (C) vers la position du but et/ou la direction (A) de l'axe optique et/ou la direction (B) du sens de déplacement du véhicule sont affichées dans l'image en tant que réticule.

4. Procédé selon l'une quelconque des revendications précédentes,
**caractérisé en ce que** dans l'étape i), la direction (A) de l'axe optique du système de capture (20) d'image est réglée dans la direction (C) sur la position du but.

5. Système de commande avec au moins un véhicule (2) susceptible d'être guidé, au moins une unité de commande (1) pour le véhicule (2) et un système de transfert de données (3), pour l'échange de données et/ou de signaux entre le véhicule (2) et l'unité de commande (1),
- le véhicule (2) comportant au moins une tête chercheuse munie d'un système de capture (20) d'images, un système de traitement de signaux d'images, une unité émettrice et réceptrice (32) côté véhicule, ainsi qu'un système de commande pour le véhicule (2) ;
- l'unité de commande (1) comportant une unité émettrice et réceptrice (31) côté unité de commande, un système de traitement des signaux, un système d'affichage (12) d'images et un système de saisie (10) d'instructions ;
- à l'unité émettrice et réceptrice (32) côté véhicule étant affecté un système de compression des données et à l'unité émettrice et réceptrice (31) côté unité de commande étant affecté un système de décompression des données et
- le système de traitement des signaux de l'unité de commande (1) étant conçu de sorte à retransmettre au système d'affichage (12) d'images des données-images réceptionnées par le système de capture (20) d'images du véhicule (2) d'images successives dans le temps ;
- l'unité de commande (1) et le véhicule (2) étant conçus pour réaliser le procédé selon la revendication 1.
